# EUROPÄISCHE PATENTSCHRIFT

(11) **EP 1 179 921 B1**
(45) Veröffentlichungstag und Bekanntmachung des Hinweises auf die Patenterteilung: **18.10.2006**
(21) Anmeldenummer: 01000360.6
(22) Anmeldetag: 09.08.2001
(51) Int. Cl.: H04L 12/44, H04L 12/40

(54) **Aktivitätsdetektion in einem Sternknoten mit mehreren gekoppelten Netzknoten**
Activity detection in a hub coupled to a pluality of nodes
Détection d'activité dans un noeud central couplé à plusieurs noeuds

(30) Priorität: 10.08.2000 DE 10039838
(43) Veröffentlichungstag der Anmeldung: 13.02.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Fuhrmann, Peter, Philips Corp. Intel. Prop. GmbH, 52064 Aachen (DE); Budde,Wolfgang, Dr. O. Philips Corp. In. Prop.GmbH, 52064 Aachen (DE); Boezen, Henk Philips Corp. Intel. Prop. GmbH, 52064 Aachen (DE); Heuts, Patrick, Philips Corp. Intel. Prop. GmbH, 52064 Aachen (DE)
(74) Vertreter: Volmer, Georg

(56) Entgegenhaltungen:
- EP-A- 1 085 705
- EP-A- 1 143 668
- US-A- 4 428 046
- HUNG KHEI HUANG ET AL: "COLLISION AVOIDANCE TREE NETWORKS" COMPUTER NETWORKS AND ISDN SYSTEMS, NORTH HOLLAND PUBLISHING. AMSTERDAM, NL, Bd. 26, Nr. 6/8, 1. März 1994 (1994-03-01), Seiten 895-911, XP000434921 ISSN: 0169-7552

## Beschreibung

Die Erfindung bezieht sich auf ein Netzwerk mit mehreren Netzknoten. Solche Netzwerke können beispielsweise in Kraftfahrzeugen, in der Luft- und Raumfahrttechnik, in der Industrieautomatisierung (z.B. Sensorsysteme) und Hausautomatisierung (z.B. Lichttechnik, Alarmanlagen, Heizungsanlage, Klimatechnik etc.) eingesetzt werden.

In einem solchen Netzwerk für die Kraftfahrzeugtechnik kann z.B. das aus der Zeitschrift "Eektronik", Nr. 14, 1999, Seiten 36 bis 43 (Dr. Stefan Polenda, Georg Kroiss: "TTP: "Drive by Wire" in greifbarer Nähe") bekannte TTP-Protokoll (TTP = Time-Triggered Protocol) verwendet werden. Dieses Protokoll ermöglicht eine sichere Datenübertragung und kann daher auch in Netzwerken für sicherheitsrelevante Vorrichtungen (z.B. Bremsen) gebraucht werden. In dem erwähnten Artikel ist als Netzwerkstruktur ein Bussystem erwähnt

Aus den nicht vorveröffentlichten Europäischen Patentanmeldungen EP 1 143668 A2 und EP 1085 705 A2 sind noch Netzwerke mit mehreren Netzknoten und einem Sternknoten bekannt. Eine jeweils einem Netzknoten zugeordnete Sternschnittstelle in dem Sternknoten enthält einen nicht näher beschriebenen Pilotsignaldetektor zur Detektierung eines von einem Netzknoten gesendeten Pilotsignals.

Aus US-A-4 428 046 ist ein Datenverarbeitungssystem bekannt, welches eine Anzahl von über einen Stemkoppler verbundene Subsysteme enthält. Der Sternkoppler weist eine komplexe Entscheidungsschaltung zur Steuerung des Sternkopplers auf Dadurch kann immer nur ein ausgewähltes Subsystem Nachrichten durch den Sternkoppler senden. Ein sendendes Subsystem kennzeichnet den Beginn und das Ende einer Nachricht durch bestimmte Muster. Das sind jeweils Folgen von "1" und "0" (sogenannte Flag-Bits), die sonst im Nachrichtensignal nicht vorkommen.

Aus dem Dokument "HUNG KHEI HUANG ET AL.; ,COLLISION AVOIDANCE TREE NETWORKS' COMPUTER NETWORKS AND ISDN SYSTEMS, NORTH HOLLAND PUBLISHING. AMSTERDAM, NL, Bd. 26, Nr. 6/8, 1. März 1994 (1994-03-01), Seiten 895 - 911" ist noch eine Kollisionsvermeidung für Baum-Netzwerke mit Verrnittlungsanordnungen bekannt. Eine solche Vermittlungsanordnung enthält nicht näher beschriebene Schaltungselemente zur Auswertung von Steuersignalen, die den Anfang und das Ende von Paketen kennzeichnen.

Der Erfindung liegt die Aufgabe zugrunde, ein anderes Netzwerk mit mehreren Netzknoten zu schaffen, dass eine sichere Aktivitätserkennung im Nachrichtensignal ermöglicht.

Die Aufgabe wird durch ein Verfahren und einen Apparat gemäß den Ansprüchen 1 und 7 gelöst.

Die Erfindung bezieht sich auf ein Netzwerk mit mehreren Netzknoten, die wenigstens teilweise in einem Sternknoten miteinander gekoppelt sind. Wenn ein Netzknoten eine Nachricht senden möchte, wird dies einer Sternschnittstelle im Sternknoten signalisiert. Diese Signalisierung kann eine bestimmte im Nachrichtensignal des Netzknoten eingeblendete Aktivität sein, die beispielsweise ein mit der Nachricht überlagertes Pilotsignal hervorruft. Beispielsweise kann diese Aktivität durch einen Pegelwechsel vorgenommen werden, den die Sternschnittstelle an der zugeordneten Verbindung einwandfrei vom Ruhepegel der Leitung unterscheiden kann.

Erfindungsgemäß enthält eine Sternschnittstelle, die wenigstens einem Netzknoten zugeordnet ist, einen Aktivitätsdetektor zur Bestimmung einer Aktivität im Nachrichtensignal des zugeordneten Netzknotens. Hierbei muss zuerst eine Sendeanforderung in der zugeordneten Sternschnittstelle erkannt werden. Diese Erkennung reagiert auf eine Signalaktivität auf der Leitung, auf welcher das Nachrichtensignal geführt wird, und prüft kontinuierlich, ob auch weiterhin Aktivität durch den Sendeknoten generiert wird, bzw. ob das Ende der Sendeaktivität erreicht ist.

In Abhängigkeit von der Folge der Aktivitäten wird das Nachrichtensignal an die anderen Netzknoten über deren zugeordnete Sternschnittstellen weitergeleitet. Dazu werden z.B. in dem Sternknoten schaltbare Verstärker geschaltet. In einem Netzwerk mit hohen Datenraten und vielen Netzknoten, die untereinander Daten austauschen, ist es erforderlich, dass der Sternknoten häufig und sehr schnell eine Umkonfiguration der Verstärker im Sternknoten vornehmen kann. Dies muss in Abhängigkeit von dem jeweils gerade aktuellen Sendeknoten geschehen.

Mit der Erfindung wird die Forderung einer möglichst kurzen Konfigurationszeit und einer hohen Unempfindlichkeit gegen Störungen erfüllt, die nicht zu einer unbeabsichtigten Konfiguration führen sollen.

Ausführungsbeispiele der Erfindung werden nachstehend anhand der Fig. näher erläutert.
Es zeigen:
- Fig 1: ein Netzwerk in Sternstruktur mit mehreren Netzknoten, die über einen aktiven Sternknoten gekoppelt sind,
- Fig 2: ein Prinzipschaltbild einer Sternschnittstelle in einem Sternknoten,
- Fig. 3 bis 5: verschiedene Signalverläufe, die in der Sternschnittstelle nach Fig 2 auftreten können,
- Fig 6: eine Ausführungsform einer Sternschnittstelle,
- Fig 7: ein Funktionsschaltbild eines in der Sternschnittstelle zu verwendenden Aktivitätsdetektors,
- Fig 8, 10, 12 und 15: unterschiedliche Ausführungsformen eines Aktivitätsdetektors,
- Fig 9,11 und 14: verschiedene Signalverläufe in den Aktivitätsdetektoren nach Fig. 8, 10 und 12 und
- Fig 13: ein Funktionsschaltbild des analogen Aktivitätsdetektors nach Fig 12.

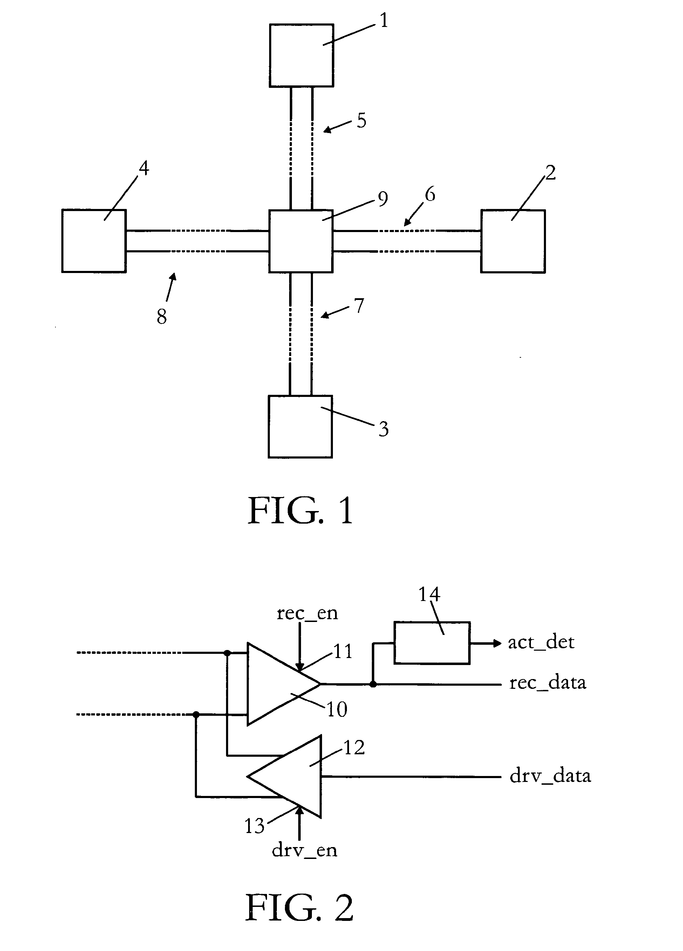

Ein Ausführungsbeispiel des erfindungsgemäßen Netzwerks ist in Fig. 1 dargestellt. Dieses Netzwerk enthält beispielsweise vier Netzknoten 1 bis 4, die jeweils über verdrillte, für eine symmetrische Signalübertragung vorgesehene Leitungspaare 5 bis 8 (twisted-pair) miteinander über einen aktiven Sternknoten 9 gekoppelt sind. Der aktive Sternknoten 9 führt eine Leitungsanpassung durch, so dass die Leitungspaare 5 bis 8 im aktiven Sternknoten 9 mit dem Wellenwiderstand abgeschlossen sind, und analysiert die von den Netzknoten 1 bis 4 ausgesendeten Signale. Wenn die Leitungspaare 5 bis 8 ohne aktiven Sternknoten 9 miteinander verbunden wären, entstände für jedes Leitungspaar im Sternpunkt eine Fehlanpassung durch den Impedanzsprung von Z₀ auf 1/3 Z₀, die durch die Parallelschaltung der jeweils anderen Leitungspaare verursacht wird.

Möglich ist auch, dass anstelle von Leitungspaaren 5 bis 8 für die optische Signalübertragung geeignete optische Fasern verwendet werden. In diesem Fall sind in den Netzknoten 1 bis 4 und in dem Sternknoten 9 ein elektrisch-optischer bzw. optischelektrischer Umsetzer erforderlich.

Der aktive Sternknoten 9 enthält für jedes Leitungspaar 5 bis 8 eine Sternschnittstelle, die eine Weiterleitung einer Nachricht eines sendenden Netzknotens zu allen anderen am aktiven Stern angeschlossenen Netzknoten ermöglicht. Das Prinzipschaltbild einer solchen Sternschnittstelle zeigt Fig. 2. Ein Leitungspaar 5 bis 8 ist mit den Eingängen eines schaltbaren Verstärkers 10 (erstes Schaltelement), der einen Schalteingang 11 aufweist, und mit den Ausgängen eines weiteren schaltbaren Verstärkers 12 (zweites Schaltelement) gekoppelt, der einen Schalteingang 13 aufweist. Am Ausgang des schaltbaren Verstärkers 10 liegt ein Signal rec_data und an dessen Schalteingang 11 ein Signal rec_en an. Mit dem Ausgang des Verstärkers 10 ist ein Aktivitätsdetektor 14 gekoppelt, der das Ausgangssignal rec_data analysiert. Der Eingang des schaltbaren Verstärkers 12 erhält ein Eingangssignal drv_data Sein Schalteingang 13 empfängt das Signal drv_en. Der Aktivitätsdetektor 14 kann auch vor dem Verstärker 10 angeordnet sein, wenn er einen eigenen Empfangsverstärker und einen Schalteingang zur Abschaltung der Aktivitätserkennung aufweist.

Der Aktivitätsdetektor 14 einer Sternschnittstelle dient zur Erkennung bestimmter Aktivitäten in einem Signal, welches der zugeordneten Sternschnittstelle über das zugeordnete Leitungspaar von dem zugeordneten Netzknoten zugeführt wird und eine kommende Übertragung von einer Nachricht angibt. Eine solche Aktivität kann beispielsweise ein Wechsel des Signalpegels in einem Signal mit bestimmten nachfolgenden Signalveränderungen bedeuten. Nach der Erkennung von Aktivität werden im Sternknoten 9 dann die anderen Sternschnittstellen so geschaltet, dass sie nur eine Nachricht von der Sternschnittstelle erhalten, die eine Nachricht von dem zugeordneten Netzknoten empfängt. Dieser Zustand des Sternknotens wird solange beibehalten, bis der zugeordnete Netzknoten seine Nachricht vollständig gesendet hat. Dazu wird in der Sternschnittstelle kontinuierlich geprüft, ob die Nachricht noch gesendet wird, d.h. ob noch Aktivität am Ausgang des schaltbaren Verstärkers 10 detektierbar ist oder ob der Sendevorgang abgeschlossen wurde (keine Aktivität). Ein Ende der Übertragung wird also dann erkannt, wenn für ein definiertes Zeitintervall keine Aktivität auf der Leitung festgestellt wurde. Es wird kein spezielles, die Nachricht begleitendes Signal zur Steuerung des Sternknotens 9 verwendet, sondern die übertragene Nachricht selbst bewirkt, dass der Aktivitätsdetektor 14 die einmal aufgebaute Sternkonfiguration (Einstellung der schaltbaren Verstärker 10 und 12) aufrecht erhält.

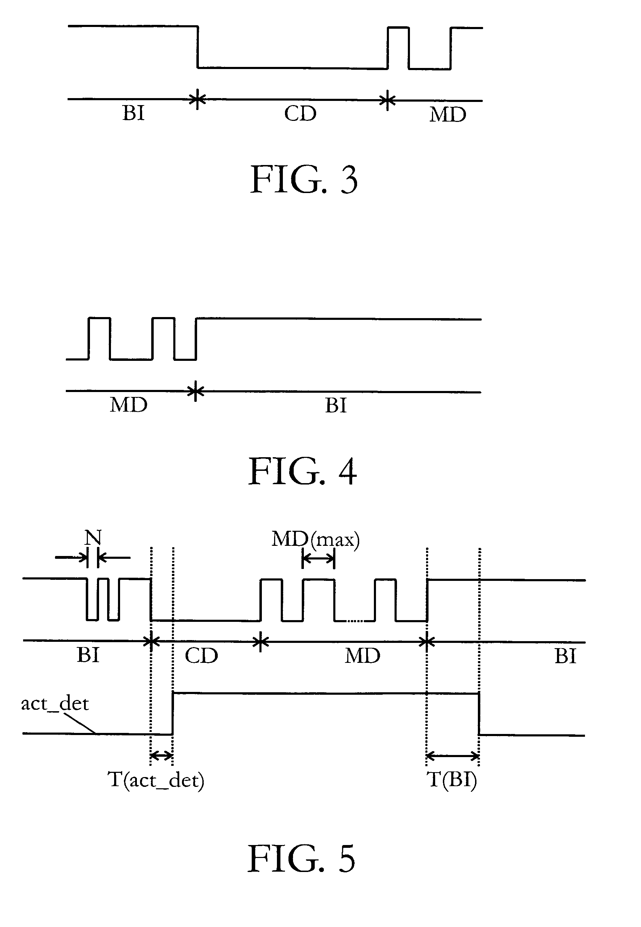

Soll von einem Netzknoten eine Nachricht abgesetzt werden, muss von dem Netzknoten eine bestimmte Aktivität erzeugt werden, die als Sendeanforderung bezeichnet wird. Ein beispielhafter Signalverlauf bei einer Sendeanforderung ist in Fig. 3 dargestellt. Das Signal weist drei Phasen BI, CD und MD auf. Durch einen Pegelwechsel am Ende der Phase BI und am Anfang der Phase CD zeigt der Netzknoten an, dass er eine Nachricht übertragen will. Dieser Pegelwechsel wird durch die zugeordnete Sternschnittstelle des Sternknotens 9 detektiert und der schaltbare Verstärker 12 der zugeordneten Sternschnittstelle und die schaltbaren Verstärker 11 der anderen Sternschnittstellen abgeschaltet und die schaltbaren Verstärker 12 der anderen Sternschnittstellen geöffnet. Wenn die anderen Netzknoten das gesendete Signal des gerade aktiven Sendeknotens empfangen können, beginnt die Phase MD (Übertragung der Daten). Die Zeit CD, die eine Sternschnittstelle im Sternknoten 9 benötigt, um die Signalflanke zu erkennen, diese gegenüber einer Störung zu unterscheiden und seine sowie die Verstärker der anderen Sternschnittstellen entsprechend zu schalten, muss von dem sendenden Netzknoten beachtet werden, bevor er seine Nachricht absetzten darf. Dieses Zeitintervall CD hängt von der gewählten Implementierung der Aktivitätserkennung (gewählter Aktivitätsdetektor 14) sowie der Anzahl der Sternknoten im Netz ab. Der Sternknoten 9 in Fig 1 kann anstelle eines Netzknotens auch mit mindestens einem weiteren Sternknoten, an den weitere Netzknoten angeschlossen sind, verbunden sein. In diesem Fall muss die Sendeanforderung von dem Sternknoten 9 noch an den zweiten Sternknoten weitergereicht werden und die Konfigurationszeit dieses zweiten Sternknotens gehört zur Phase CD. Das ist deshalb erforderlich, damit die zu sendende Nachricht auch die Netzknoten erreicht, die an dem zweiten Sternknoten angeschlossenen sind.

Wie oben erwähnt, ist die in Fig 2 dargestellte Sternschnittstelle, die auf der Verbindung zu dem angeschlossenen Netzknoten einen Pegelwechsel erkennt, dazu vorgesehen, dieses Ereignis an die anderen Stemsdmittstellen des Sternknotens 9 weiterzureichen. Das von dem Aktivitätsdetektor 14 erzeugte Steuersignal act_det wird zur Steuerung der schaltbaren Verstärker 10 und 12 verwendet. Der Aktivitätsdetektor 14 aktiviert das Steuersignal act_det nach Erkennung einer Aktivität. Es bleibt aktiv, solange eine Nachricht das Netzwerk durchläuft. Dabei werden die Pegelwechsel innerhalb der Nachricht als Aktivität interpretiert. Bleiben diese Wechsel aus, so erkennt der Detektor, dass das Ende der Nachricht erreicht ist. Ein beispielhafter Signalverlauf mit den Phasen MD und BI bei einem Ende der Nachricht zeigt Fig. 4. Das Ende einer Nachricht wird durch einen konstanten Pegel (Phase BI) gekennzeichnet. Die maximalen Zeitintervalle konstanter Pegel innerhalb der Nachricht (Phase MD) dürfen nicht zum Abschalten des Steuersignals act_det führen. Erst nach einem Zeitintervall, welches eine bestimmte Zeit keine Pegeländerung enthält, wird ein Ende der Aktivität und damit das Ende der Nachricht erkannt. Das Steuerleitung act_det wird daraufhin deaktiviert. Dieses Ereignis wird an die übrigen Sternschnittstellen weitergeleitet und die angeschalteten Verstärker dieser Sternschnittstellen werden abgeschaltet. Der Sternknoten geht wieder in einen Zustand über, in dem er auf eine neue Sendeanforderung eines beliebigen Netzknotens reagieren kann und eine entsprechende Konfiguration des Datenpfades im Netzwerk vornehmen kann.

Fig 5 zeigt einen beispielhaften Verlauf eines Signals eines Netzknotens mit Störimpulsen und das daraus generierte Steuersignal act_det des Aktivitätsdetektors 14. Die maximale Dauer (N) eines Störimpulses auf der Leitung, die von einem System toleriert werden soll, hat Einfluss auf die Verzögerung, mit der eine Sendeanforderung einwandfrei erkannt wird. Die Verzögerung T (act_det) ist immer größer als die tolerierbare Störimpulsbreite, damit eine Unterscheidung der beide Ereignisse überhaupt möglich ist. Dies wird von dem Aktivitätsdetektor 14 berücksichtigt.

Die Zeitdauer MD(max) gibt das maximale Zeitintervall zwischen zwei Pegelwechsel innerhalb einer Nachricht an. Dieses maximale Zeitintervall ist abhängig von der gewählten Codierung und der Datenrate. Ein Übertragungsverfahren, für welches das Zeitintervall MD(max) nicht bestimmbar ist, ist für den Einsatz der Aktivitätserkennung zur Steuerung aktiver Sternnetzwerke nicht geeignet. Es können z.B. bei einem Übertragungsverfahren, welches die NRZ-Codierung verwendet, für eine unbestimmte Zeitdauer keine Pegelwechsel auftauchen.

Das Zeitintervall T(BI), das der Aktivitätsdetektor 14 benötigt, das Ende einer Übertragung sicher zu erkennen, muss größer als die maximale Breite MD(max) eines Impulses während einer Nachricht sein. Nur so ist sichergestellt, dass eine Verbindung nicht während einer laufenden Nachrichtenübertragung abgebrochen wird

Das Zeitintervall T(BI) sollte so bestimmt werde, dass dieses ein zusätzliches Sicherheits-Zeitintervall enthält. Hierdurch wird die Wahrscheinlichkeit einer fehlerhaften Erkennung des Endes einer Nachrichtenübertragung verringert. Dieses Sicherheits-Zeitintervall wird durch verschiedene Systemungenauigkeiten erforderlich (z.B. Abtastfehler bei einer digitalen Flankenerkennung, Drift von Bauteileigenschaften etc.).

Das Prinzip der Aktivitätserkennung lässt sich generell auf jede Art der Signalübertragung anwenden, zB. auch auf eine Einzelleiterübertragung, und ist nicht auf eine symmetrische Gegentaktübertragung beschränkt. Entscheidend ist der logische Pegel, welcher dem Aktivitätsdetektor zugeführt wird.

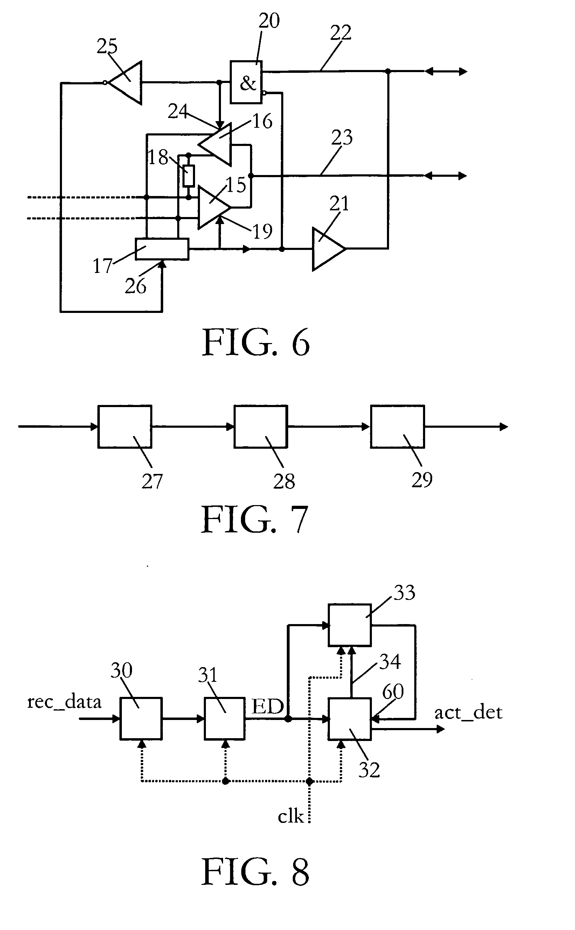

Ein Ausführungsbeispiel einer Sternschnittstelle ist in Fig. 6 gezeigt. Ein Leitungspaar ist mit den Eingängen eines schaltbaren Verstärkers 15, mit den Ausgängen eines weiteren schaltbaren Verstärkers 16, mit einem Aktivitätsdetektor 17 und mit einem Abschlusswderstand 18 verbunden. Der Wert des Abschlusswiderstandes 18 entspricht dem Wellenwiderstand und dient damit zum korrekten Leitungsabschluss. Wenn der Aktivitätsdetektor 17 eine Sendeanforderung detektiert, erzeugt dieser ein aktiviertes Steuersignal, welches zu einem Schalteingang 19 des schaltbaren Verstärkers 15, zu einem invertierenden Eingang eines UND-Gatters 20 und über einen Verstärker 21 zu einer Leitung 22, die mit einem nichtinvertierenden Eingang des UND-Gatters 20 verbunden ist. Wenn der schaltbare Verstärker 15 freigegeben ist, liefert dieser Daten zu einer zu einem Verknüpfungspunkt führenden Datenleitung 23. Von dieser Datenleitung 23 werden auch Daten von den anderen Sternschnittstellen empfangen und über den schaltbaren Verstärker 16 zu dem zugeordneten Leitungspaar geleitet. Der nichtinvertierende Ausgang des UND-Gatters 20 ist mit einem Schalteingang 24 des schaltbaren Verstärkers 16 sowie über einen Inverter 25 mit einem Schalteingang 26 des Aktivitätsdetektors 17 verbunden. Über den Eingang 26 des Aktivitätsdetektors wird ein von einer anderen Sternschnittstelle kommendes aktiviertes Steuersignal zur Sperrung des Aktivitätsdetektors verwendet.

Die Sternschnittstelle nach Fig 6 ist mit den anderen Sternschnittstellen eines Sternknotens 9 über eine Wired-OR-Verknüpfung (Leitung 22) verbunden. Der Verstärker 21 ist in der Fig 6 als "Open-Drain"-Verstärker realisiert. Die Sternschnittstellen eines Sternknotens 9 sind in diesem Fall mit ihren jeweiligen Leitungen 22 und 23 verbunden, so dass sich dadurch, zwei Schaltungsknoten bilden. Zusätzlich ist ein Widerstand vorzusehen, der einerseits mit dem Schaltungsknoten (Leitung 22) und andererseits mit dem Pegel logischen "0" gekoppelt ist. Dieser Widerstand bildet zusammen mit den Verstärkern 21 jeder Sternschnittstelle die Wired-OR-Verknüpfung. Eine 'Open-Collector' Schaltung für den Verstärker 21 ist bei entsprechender Anpassung der logischen Verknüpfung durch das UND-Gatter 20 ebenfalls möglich, um die Wired-OR-Verknüpfung zu realisieren.

Der funktionelle Aufbau eines Aktivitätsdetektors 14 bzw. 17 ist der Fig 7 zu entnehmen. Diese enthält ein Filter 27 zur Unterdrückung von Störungen, einen Kantendetektor 28 und eine Aktivitätserkennungaachaltung 29. Das auf einem der Leitungspaare 5 bis 8 ankommende oder am Ausgang eines schaltbaren Verstärkers liegende Signal wird zur Störimpulsunterdrückung dem Filter 27 zugeführt. Das gefilterte Signal wird vom Kantendetektor 28 analysiert. Dieser meldet eine Kante bzw. eine Flanke, d.h. einen Flanken- oder Pegelwechsel der Aktivitätserkennungsschaltung 29, die feststellt, ob eine Sendeanforderung, eine Nachricht oder das Ende einer Nachricht vorliegt. Abhängig davon wird ein Steuersignal von der Aktivitätserkennungsschaltung 29 ausgegeben, welches bei Vorliegen einer Sendeanforderung aktiv wird, diesen Zustand beim Vorliegen der Nachricht beibehält und nach der Erkennung des Endes einer Nachricht wieder inaktiv wird. Der funktionale Aufbau aus Fig 7 lässt sich leicht auf ein digitales Ausführungsbeispiel, welches nachfolgend beschrieben ist, abbilden. Bei einem ebenfalls beschriebenen analogen Ausführungsbeispiel sind die funktionalen Blöcke aus Fig. 7 nicht so deutlich zuzuordnen.

Ein Ausführungsbeispiel eines ersten digitalen Aktivitätsdetektors zeigt Fig 8. Sämtliche in Fig. 8 dargestellten Schaltelemente benötigen einen gemeinsamen Takt (clk). Die Frequenz dieses Taktsignals muss so gewählt werden, dass eine ausreichende Überabtastung des Datensignals gewährleistet ist. Ist das kürzeste Intervall konstanten Pegels im Datenstrom durch TB gegeben, so darf die Periode des Taktsignals im Sternknoten maximal TB/2 betragen. Die digitale Schaltung nach Fig 8 enthält ein Filter 30, einen Kantendetektor 31 und eine Aktivitätserkennungsschaltung mit einem Sendeanforderungsspeicher 32 und einer Leerlauferkennungsschaltung 33 zur Erkennung des Endes einer Aktivität.

Das Filter 30 verhindert, dass eine Flanke, die lediglich durch einen kurzen Störimpuls auf dem Leitungspaar erzeugt wurde, durch die nachfolgende Logik als eine Sendeanforderung des Netzknotens interpretiert wird. Eine solches Filter kann beispielsweise aus einem Schieberegister (z.B. für 3 Abtastwerte) mit einer nachgeordneten Auswertelogik bestehen. Die nachgeordnete Auswertelogik ist dabei ein Teil des Kantendetektors 31. Die Abtastwerte durchlaufen das Schieberegister, wobei immer der älteste Wert entfällt, sobald ein neuer Abtastwert aufgenommen wird Der Kantendetektor 31 interpretiert die im Schieberegister gespeicherten Werte um festzustellen, ob ein Pegelwechsel (Signalflanke) tatsächlich durch einen sendenden Netzknoten verursacht wurde. Wenn ein Pegelwechsel vom zweiten zum dritten Abtastwert stattgefunden hat, so wird nur dann eine Flanke als erkannt gewertet, wenn auch der nächste Abtastwert diesen Pegelwechsel bestätigt (Abtastwert zwei und drei haben dann den gleichen Wert). Ist nur der zweite Wert verschieden, d.h. der dritte Abtastwert hat wieder den gleichen Wert wie der erste Abtastwert, so wird dies von dem Kantendetektor 31 als Störung interpretiert und keine Flankenerkennung signalisiert.

Das Filter 30 und der Kantendetektor 31 können auch aufwendiger gestaltet werden. Durch Einbeziehung von mehr Abtastwerten kann die Sicherheit erhöht werden, mit der ein Störsignal nicht zur Auslösung der Aktivitätserkennungsschaltung führt. Allerdings dürfen das Filter 30 und der Kantendetektor 31 nicht beliebig viele Abtastwerte zur Interpretation heranziehen, da dadurch auch die zeitliche Verzögerung zwischen Auftreten der Signalflanke und der Aktivierung des Steuersignals vergrößert wird.

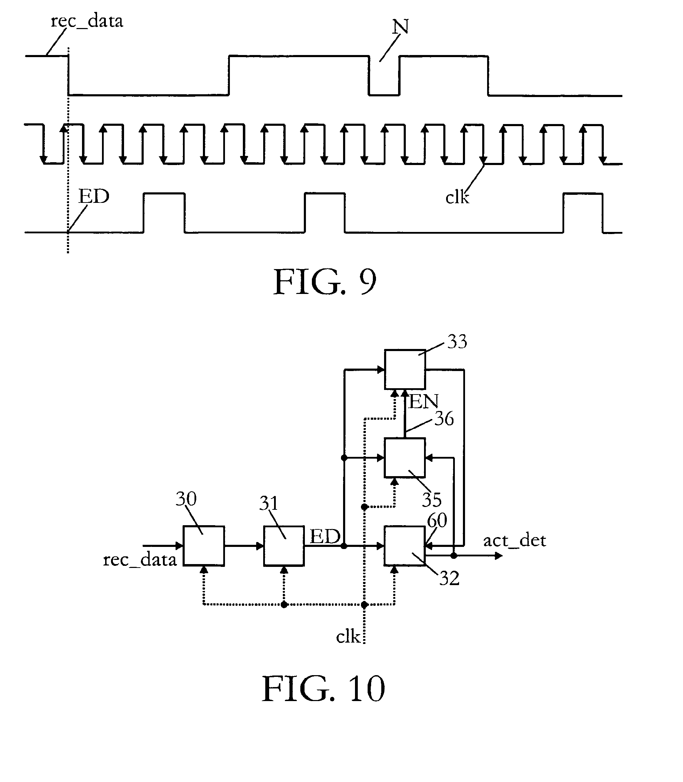

Mit Hilfe der Fig 9, die Signalverläufe in dem Aktivitätsdetektor nach der Fig 8 zeigt, wird im folgenden eine Möglichkeit erläutert, die Verzögerung durch das Filter bei gleichbleibender Frequenz des Taktes (clk) zu reduzieren. Es wird hierbei die steigende und fallende Flanke des Taktes (clk) zur Signalabtastung benutzt. Dadurch kann die Menge der Abtastwerte im gleichen Zeitintervall verdoppelt werden. Das Zeitintervall zwischen dem Auftreten eines Pegelwechsels im Eingangssignal rec_data und dem Auftreten eines Impulses im Ausgangssignal ED des Kantendetektors 31 wird dadurch verkürzt. Ein Impuls im Ausgangssignal ED ist auf das Taktsignal clk der Aktivitätserkennungaschaltung synchronisiert und liegt jeweils für eine Taktperiode an.

Es ist zu erwähnen, dass das Filter 30 zur Beseitigung von Störungen auch analog realisiert, oder das digitale Filter 30 durch ein vorgeschaltetes, analoges Filter (Tiefpass) ergänzt werden kann.

Wurde eine Flanke von dem Kantendetektor 31 erkannt, d.h. dessen Ausgangssignal ED ist aktiv, so wird diese Information im Sendeanforderungaspeicher 32 abgelegt. Die EinSpeisung in diesen Speicher kann zB. über einen synchronen Setzeingang erfolgen. Der Ausgang des Sendeanforderungsspeichers 32 ist das Steuersignal act_det, welches - wie oben erläutert - zur Steuerung der eigenen aber auch der anderen Sternschnittstellen des Sternknotens 9 verwendet wird.

Der Sendeanforderungsspeicher hält das Steuersignal act_det solange aktiv, bis die Leerlauferkennungsschaltung 33 das Ende der Aktivität feststellt und dann über einen synchronen Rücksetzeingang 60 den Sendeanforderungsspeichers 32 zurücksetzt. Das Steuersignal act_det ist dann deaktiviert.

Die Leerlauferkennungsschaltung 33 überprüft nach einer Aktivierung durch den Sendeanforderungsspeicher über eine Verbindung 34, ob weitere Pegelwechsel (= Aktivität) im Ausgangssignal vorkommen. Diese Pegelwechsel werden, wie oben beschrieben, durch Impulse im Ausgangssignal des Flankendetektors 31 angezeigt. Das Signal rec_data in Fig. 9 enthält einen Störung N, die von dem Flankendetektor als solche erkannt wird und keinen Impuls im Ausgangssignal des Flankendetektors 31 hervorruft. Erst wenn für ein definiertes Intervall kein Impuls mehr auftritt, aktiviert die Leerlauferkennungsschaltung 33 ihr Ausgangssignal. Dieses Ausgangssignal signalisiert dann, dass das Ende der aktuellen Nachricht erreicht wurde und setzt den Sendeanforderungsspeicher 32 zurück.

Die Leerlauferkennungsschaltung 33 kann ein Zähler sein, der nach einer Freigabe mit einer einstellbaren Granularität (Zählschrittweite) beginnt, seinen internen Zählerstand zu inkrementieren. Durch die Festlegung einer Überlaufbedingung kann ein Zeitintervall definiert werden, nach dessen Ablauf der Zähler sein Ausgangssignal aktiviert. Der Zähler kann selbstverständlich auch als Abwärtszähler vorgesehen werden, der mit einem festgelegten Anfangsstand beginnt und bei Unterschreiten einer unteren Grenze (z.B. Null) eine entsprechende Aktivierung seines Ausgangssignals vornimmt.

Das Ausgangssignal ED des Flankendetektors 31 wird bei einer Realisierung der Leerlauferkennungsschaltung 33 als Zähler dazu verwendet, den Zählerstand auf den Ausgangszustand zurückzusetzen. Dadurch wird die Ablaufbedingung des Zählers nicht erreicht, solange die Impulse im Ausgangssignal des Flankendetektors 31 in genügend kurzen Abständen aufeinanderfolgen. Diese Abstände werden durch die Art der Codierung der Nachricht und die Datenrate definiert. Auch das Auftreten des längsten, innerhalb einer codierten Nachricht möglichen Zeitintervalls zwischen zwei Pegelwechseln darf nicht dazu führen, dass der Zähler seinen Ablaufzählerstand erreicht.

Eine Dimensionierung dieses Intervalls muss also der Art der Nachrichtencodierung angepasst und der Zähler entsprechend konfiguriert werden. Dies kann beispielsweise über einen programmierbaren Ablauf- bzw. Startzählerstand realisiert werden. Es ist auch möglich, die Zählschrittweite durch einen konfigurierbaren Taktteiler für den Takt (clk) einzustellen, so dass dem Zähler ein entsprechend angepasster Zähltakt zugeführt wird.

Die Freischaltung der Leerlauferkennungsschaltung 33 erfolgt durch den Sendeanforderungsspeicher über die Verbindung 34. Wie oben erläutert, wird die erste Flanke auf einem Leitungspaar 5 bis 8 (Sendeanforderung) dazu verwendet, die schaltbaren Verstärker in den Sternschnittstellen für die nachfolgende Nachrichtenübertragung einzustellen. Die Sendeanforderung muss daher immer ein bestimmtes Zeitintervall vor der eigentlichen Nachricht abgesetzt werden, damit die Verstärker im Sternknoten 9 geschaltet werden können und sich Verbindungspfade im Sternknoten zur Nachrichtenübermittlung von einem Netzknoten zu den anderen Netzknoten ergeben, bevor die eigentliche Nachrichtenübertragung beginnt. Es ist daher möglich, dass zwischen der ersten Signalflanke des Signals rec_data (vgl. Fig 9: erster Impuls im Ausgangssignal ED des Flankendetektors 31) und der ersten, durch die Nachricht verursachten Signalflanke (vgl. Fig 9: zweiter Impuls im Ausgangssignal ED des Flankendetektors 31) ein Zeitintervall vergeht, waches größer als das definierte Zeitintervall der Leerlauferkennungsschaltung 33 ist. Die Leerlauferkennungsschaltung 33 würde in diesem Fall eine Verbindung wieder beenden, bevor die Nachricht durch den sendenden Netzknoten abgesetzt wurde. Dies kann mit Hilfe einer zusätzlichen Freigabekontrollschaltung 35 verhindert werden. Diese erlaubt erst bei Auftreten des zweiten Pegelwechsels im Signal rec_data die Freigabe der Leerlauferkennungsschaltung 33 über eine Verbindung 36 (vgl. Fig 10: Freigabesignal EN).

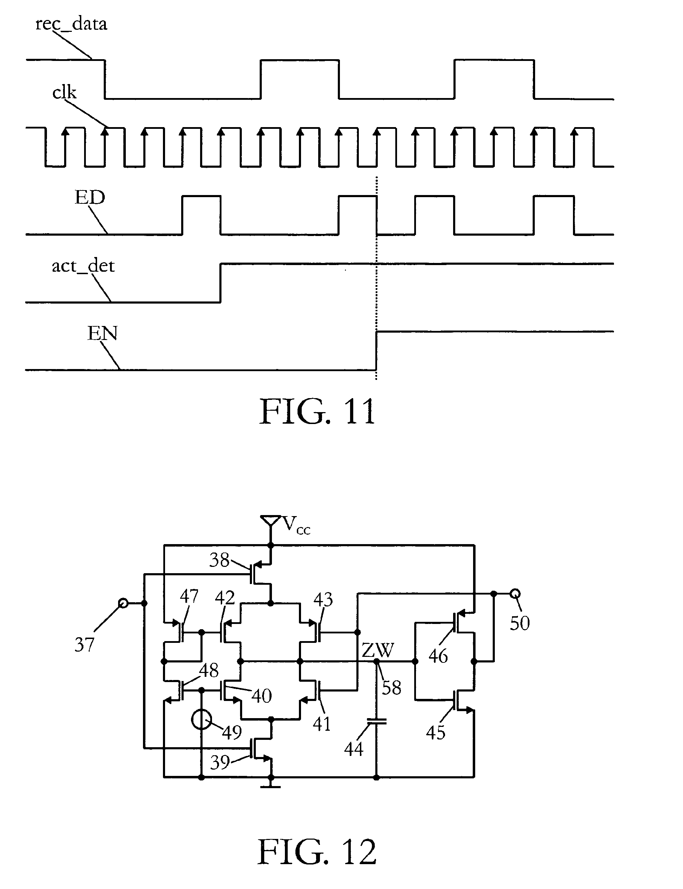

Fig 11 zeigt verschiedene Signalverläufe in dem Aktivitätsdetektor nach Fig. 10. Wie sich hieraus ergibt, wird das Freigabesignal EN für die Leerlauferkennungsschaltung 33 erst mit der ersten Signalflanke der Datennachricht aktiviert. Die Leerlauferkennungsschaltung 33 prüft also erst ab dem Beginn der Nachricht, ob das definierte Intervall ohne Aktivität im Signal rec_data erkennbar ist

Ein weiteres Ausführungsbeispiel eines analogen Aktivitätsdetektors ist in Fig 12 dargestellt. Bei Verwendung eines analogen Aktivitätsdetektor ist im Sternknoten keine Taktquelle erforderlich. Der analoge Aktivitätsdetektor empfängt an seinem Eingang 37 das Signal rec_data, welches zum Gate-Anschluss eines P-Kanal-MOS-Feldeffekttransistors 38 und dem Gate-Anschluss eines N-Kanal-MOS-Feldeffekttransistors 39 geführt wird. Der Source-Anschluss des Transistors 39 ist mit Masse und dessen Drain-Anschluss mit den Source-Anschlüssen von zwei N-Kanal-MOS-Feldeffekttransistoren 40 und 41 verbunden. Der Source-Anschluss des Transistors 38 ist an eine Spannungsversorgung V_{CC} angeschlossen. Der Drain-Anschluss des Transistors 38 ist mit den Source-Anschlüssen von zwei P-Kanal-MOS-Feldeffekttransistoren 42 und 43 verbunden, deren Drain-Anschlüsse einen gemeinsamen Knoten 58 mit den Drain-Anschlüssen der Transistoren 40 und 41, einem Anschluss eines Kondensators 44 und dem Gate-Anschluss eines N-Kanal-MOS-Feldeffekttransistors 45 und dem Gate-Anschluss eines P-Kanal-MOS-Feldeffekttransistors 46 bilden. Der Gate-Anschluss des Transistors 42 ist mit dem Gate-Anschluss und dem Drain-Anschluss eines P-Kanal-MOS-Feldeffekttransistors 47 und dem Drain-Anschluss eines N-Kanal-MOS-Feldeffekttransistors 48 verbunden. Der Source-Anschluss des Transistors 47 ist an die Spannungsversorgung V_{CC} gelegt. Der Gate-Anschluss des Transistors 48 ist einerseits mit dem Gate-Anschluss des Transistors 40 und andererseits mit einer Spannungsquelle 49 (V_{ref})verbunden. Der andere Anschluss der Spannungsquelle 49 ist ebenso wie der Source-Anschluss des Transistors 48 an Masse angeschlossen.

Die Gate-Anschlüsse der Transistoren 41 und 43 und die Drain-Anschlüsse der Transistoren 45 und 46 bilden den das Steuersignal act_det liefernden Ausgang 50 des analogen Aktivitätsdetektors. Der Source-Anschluss des Transistors 46 ist noch mit der Spannungsquelle V_{CC} und der Source-Anschluss des Transistors 45 ebenso wie der andere Anschluss des Kondensators 44 mit Masse verbunden.

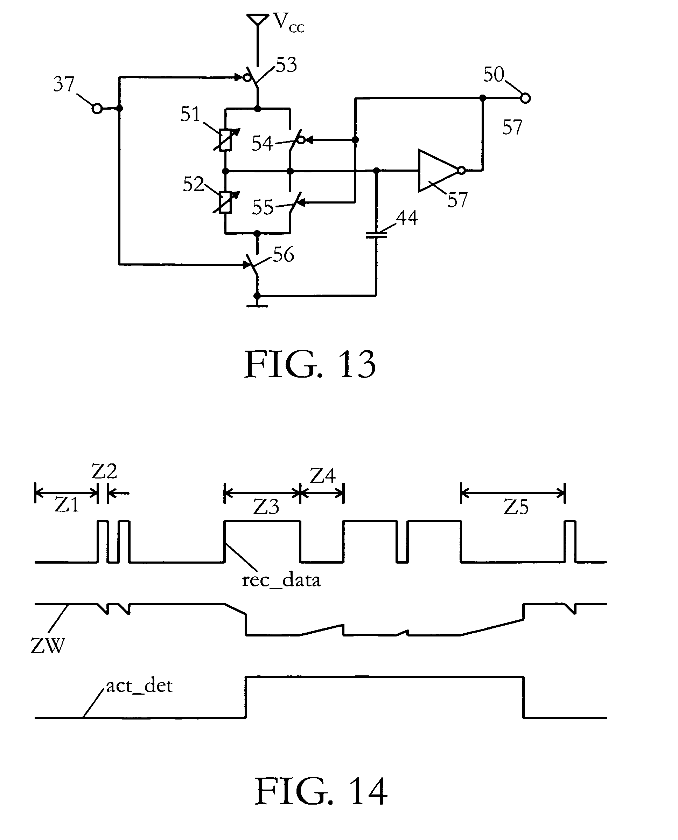

Die verschiedenen Funktionen der Transistoren in dem analogen Aktivitätsdetektor nach Fig 12 lassen sich mit Hilfe des Funktionsschaltbildes nach Fig. 13 erläutern. Ein einstellbarer Widerstand 51 wird durch die Spannungsquelle 49 und die Transistoren 42, 47 und 48 und ein einstellbarer Widerstand 52 durch die Spannungsquelle 49 und den Transistor 40 gebildet. Der Transistor 38 stellt einen Schalter 53, der Transistor 43 einen Schalter 54, der Transistor 41 einen Schalter 55 und der Transistor 39 einen Schalter 56 dar. Die Transistoren 45 und 46 bilden einen Inverter 57.

Im Gegensatz zu dem Ausführungsbeispiel des digitalen Aktivitätsdetektors wird vorausgesetzt, dass am Eingang 37 ein niedriger Spannungspegel (logisch "0") anliegt, wenn keine Nachrichten übertragen werden. Bei diesem ersten Zustand Z1 (Ausgangszustand) liegt am Eingang 37 und am Ausgang 50 ein niedriger Spannungspegel (rec_data = 0, act_det = 0) vor. Der Transistor 38 ist in diesem Zustand eingeschaltet und der Transistor 39 ausgeschaltet. Da am Ausgang 50 ebenfalls ein niedriger Spannungspegel anliegt, wird in diesem Zustand der Transistor 43 eingeschaltet und der Transistor 41 ausgeschaltet. Der Kondensator 44 wird über die Transistoren 38 und 43 auf die positive Vefsorgungsspannung V_{CC} aufgeladen. Am Knoten 58 zwischen den Drain-Anschlüssen der Transistoren 41 und 43 liegt das Signal ZW an (vgl. Fig 14), welches in diesem Zustand einen hohen Spannungspegel führt.

Im ersten Zustand Z1 sind also die Schalter 53 und 54 geschlossen und die Schalter 55 und 56 im Funktionsschaltbild nach Fig. 13 geöffnet. Der Kondensator wird über die Schalter 53 und 54 aufgeladen.

Kommt es am Eingang 37 zu einem Pegelwechsel, d.h. das Signal weist einen hohen Spannungspegel auf, so wird der Transistor 38 ausgeschaltet und der Transistor 39 geöffnet. Es fließt dann ein konstanter Strom über den Drain-Anschluss des Transistors 40, wodurch sich der Kondensator 44 entlädt.

Im zweiten Zustand Z2 (vgl. Fig. 14) treten kurze Störimpulse auf. Das bedeutet, das kurzfristig ein hoher Spannungspegel (logisch "1") im Signal rec_data vorhanden ist. Solche Störimpulse werden durch ein Filter unterdrückt, das durch den Kondensator 44 und den Widerstand des Transistors 40 bestimmt wird Sind die Störimpulse sehr kurz, so erreicht die Spannung an Knoten 58 nicht eine Schaltschwelle, bei welcher die aus den Transistoren 45 und 46 gebildete Ausgangsstufe kippt, d.h. den Ausgang 50 (Signal act_det) auf hohen Signalpegel ziehen würde. Damit bleibt das Signal am Ausgang 50 bei kurzen Störimpulsen deaktiviert. Nach dem Ende des kurzen Störimpulses führt ein niedriger Signalpegel am Eingang 37 dazu, dass der Kondensator 44 über die eingeschalteten Transistoren 38 und 43 sehr schnell wieder aufgeladen wird.

Im zweiten Zustand Z2 sind im Funktionsbild 13 also die Schalter 53 und 55 geöffnet und der Schalter 56 geschlossen. Es fließt ein Entladestrom vom Kondensator 44 über den Widerstand 52 und den Schalter 56 nach Masse ab. Der Kondensator 44 und der Widerstand 52 bestimmen die Zeitkonstante der Entladung.

Wird durch den Netzknoten eine Sendeanforderung generiert (dritter Zustand Z3), so liegt der Spannungspegel an Eingang 37 mindestens für ein Zeitintervall der Länge T(act_det) auf einem hohen Spannungspegel (vgl. Fig.5 unter Beachtung der invertierten Eingangspegel im Vergleich zu Fig. 14). Dadurch fällt die Spannung an Knoten 58 durch die Entladung über die Transistoren 39 und 40 unter die Schaltschwelle der Ausgangsstufe mit den Transistoren 45 und 46 (Inverter). Der Ausgang 50 wechselt auf einen hohen Signalpegel, d.h. das eine Sendeanforderung anzeigende Steuersignal wird aktiviert. Der Transistor 43 wird dadurch ausgeschaltet und der Transistor 41 angeschaltet. Über den Weg der Transistoren 41 und 39 wird nun der Kondensator 44 schlagartig vollständig entladen (vgl. Signalverlauf von ZW). Die Schaltung erreicht damit einen stabilen Zustand, der eine Aktivität anzeigt.

Mit dem Funktionsschaltbild nach Fig. 13 lässt sich der dritte Zustand Z3 folgendermaßen erläutern. Nach einem Wechsel des Signalpegels am Eingang 37 auf logisch "1" wird der Schalter 53 geöffnet (55 bleibt vorerst geöffnet) und der Schalter 56 geschlossen. Es fließt ein Entladestrom vom Kondensator 44 über den Widerstand 52 und den Schalter 56 nach Masse ab. Nach Erreichen der durch den Inverter 57 bestimmten Schaltschwelle, wird der Schalter 54 geöffnet und der Schalter 55 geschlossen. Hierdurch ergibt sich ein verstärkter Ladungsabfluss über die Schalter 55 und 56 nach Masse.

Während die eigentliche Nachricht übertragen wird, treten Zeitintervalle auf, in denen ein niedriger Spannungspegel am Eingang 37 anliegt. Diese Zeitintervalle sind Teil der Nachricht und daher dürfen diese nicht zu einem Wechsel des Signalpegels am Ausgang 50 führen. Wie beschrieben führt ein niedriger Eingangspegel an Knoten 37 dazu, dass der Transistor 38 geöffnet und der Transistor 39 geschlossen wird. Dadurch kann sich der Kondensator nicht länger über den Pfad aus den Transistoren 39 und 41 entladen. Über die Transistoren 38 und 42 wird der Kondensator 44 mit einem konstanten Strom, der von der Spannungsquelle 49 abhängig ist, aufgeladen (vierter Zustand Z4). Die Transistoren 47 und 42 müssen so dimensioniert sein, dass der durch 42 fließende Strom in dem vierten Zustand kleiner ist, als der, der im zweiten bzw. dritten Zustand zu einer Entladung des Kondensators 44 über den Transistor 40 geführt hat. Dadurch lässt sich die Dauer des Zeitintervalls einstellen, für die ein niedriger Spannungspegel am Eingang 37 noch nicht zu einem Wechsel des Signalpegels am Ausgang 50 führt. Der Aktivitätsdetektor bleibt also weiterhin aktiviert, solange die Zeitintervalle mit niedrigen Spannungspegel nicht eine bestimmte Dauer überschreiten.

Der Ladevorgang des Kondensators 44 über den Transistor 42 ist also langsamer als eine Entladung über den Transistor 40. Störungen während der Datenübertragung führen genauso wie niedrige Spannungspegel, nicht zu einer Beeinflussung des Steuersignals act_det am Ausgang 50. Ein nachfolgender hoher Spannungspegel am Eingang 50 sorgt dafür, dass der Kondensator 44 über die Transistoren 41 und 39 schnell entladen wird und die Erkennungsschaltung in ihrem stabilen Zustand verharrt.

Der vierte Zustand Z4 lässt sich auch am Funktionsschaltbild 13 erläutern. Der Widerstand 51 ist so gewählt, dass nach einen Wechsel von einem hohen zu einem niedrigen Spannungspegel am Eingang 37 nach Öffnen des Schalters 56 und einem Schließen des Schalters 53 der Kondensator 44 von der Spannungsquelle V_{CC} langsam aufgeladen wird.

Erst wenn das Eingangssignal rec_data am Eingang 37 solange ununterbrochen einen niedrigen Spannungspegel führt, dass durch den dauerhaften Aufladungsvorgang des Kondensators 44 die Schaltschwelle der Ausgangsstufe aus den Transistoren 45 und 46 überschritten wird, kippt das Ausgangssignal am Ausgang 50 auf einen niedrigen Signalpegel (fünfter Zustand Z5). Dies bedeutet, dass ein Ende der Aktivität auf der Leitung erkannt wurde.

Im Funktionsschaltbild nach Fig. 13 werden im fünften Zustand Z5 nach Überschreiten einer Schaltschwelle die Schalter 55 und 56 geöffnet und die Schalter 53 und 54 geschlossen. Über die Schalter 53 und 54 wird dann der Kondensator 44 aufgeladen.

Um den Anforderungen nach einer schnellen Reaktion auf eine Sendeanforderung und einer der Datenrate und Codierung angepassten Erkennung des Endes einer Nachricht zu entsprechen, müssen die resultierenden Widerstände des Transistor 40 bzw. des Transistors 42 entsprechend dimensioniert werden. Der Widerstand des Transistors 40 (entspricht dem Widerstand 52 in Fig. 13), der die Ansprechzeit des Detektors bestimmt, ist kleiner als der Widerstand des Transistors 42 (Widerstand 51 in Fig. 13), der für das Zeitintervall, welches als Ende der Aktivität angesehen wird, maßgeblich ist.

Die in Fig. 12 angegebene Spannungsquelle 49 kann durch eine Referenz-Stromquelle in Verbindung mit einer an sich bekannten Transistor-Dioden-Beschaltung realisiert werden.

Der Unterschied zwischen in der Nachricht vorkommenden Zeitintervallen mit konstantem Pegel und der Abschaltbedingung (ein Intervall ohne Aktivität, welches eine definierte Länge überschreitet), muss durch die Dimensionierung der verschiedenen Transistoren - wie oben erwähnt - gewährleistet werden. Die Zeitintervalle sind jedoch abhängig von der Datenrate, mit der eine Übertragung durchgeführt wird. Um den Aktivitätsdetektor nach Fig. 12 bei einer festgelegten Dimensionierung der Transistoren trotzdem flexibel auf unterschiedliche Datenraten einstellen zu können, kann die Spannungsquelle 49 programmierbar ausgeführt werden. Durch den einstellbaren Ladestrom wird die Ladezeitkonstante des Kondensators 44 konfigurierbar. Eine Programmierung der Aktivitätserkennungsschaltung auf eine gewünschte Datenrate kann zB. durch zusätzliche Steuerleitungen zur Einstellung der Referenzspannung an der Spannungsquelle 49 realisiert werden.

Der Transistor 47 kann auch durch eine Spannungsquelle ersetzt werden. Der Kondensator 44 muss nicht als eigenständiges Element vorhanden sein, sondern kann auch durch die parasitären Kapazitäten gebildet werden, welche die Eingangskapazitäten der Transistoren 45 und 46 bilden.

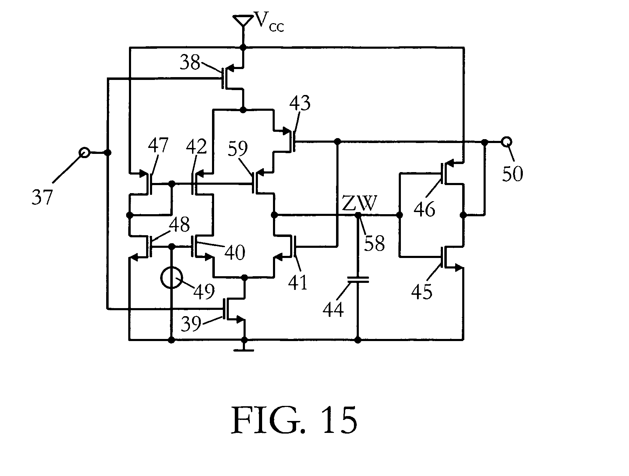

Eine weitere Ausführungsform für die analogen Aktivitätserkennung zeigt Fig. 15. Im Vergleich zu Fig 12 enthält die Schaltung einen weiteren P-Kanal-Feldeffekttransistor 59, dessen Source-Anschluss allein mit dem Drain-Anschluss des Transistors 43, dessen Gate-Anschluss mit dem Gate-Anschluss des Transistors 42 und dessen Drain-Anschluss mit dem Drain-Anschluss des Transistors 41, den Gate-Anschlüssen der Transistoren 45 und 46 und mit einem Anschluss des Kondensators 44 verbunden ist. Gegenüber Fig 12 weist die Fig 15 keine Verbindung einerseits zwischen den Drain-Anschlüssen der Transistoren 40 und 42 und den Gate-Anschlüssen der Transistoren 45 und 46 auf. Der Transistor 59 vergrößert die Zeitkonstante für den Ladevorgang des Kondensators 44, d.h. es dauert länger, das Potential an Knoten 58 anzuheben. Dies vergrößert die Immunität der Schaltung gegenüber Störimpulsen auf der Leitung.

## Patentansprüche

1. Netzwerk mit mehreren Netzknoten(1 bis 4) und einem Sternknoten(9), der zur direkten Kopplung von wenigstens zwei Netzknoten vorgesehen ist und mehrere Sternschnittstellen enthält, die wenigstens einem Netzknoten zugeordnet sind und die jeweils einen Aktivitätsdetektor (14, 17) zur Detektion von Aktivitäten im von dem zugeordneten Netzknoten kommenden Nachrichtensignal und zur Weiterleitung des Nachrichtensignals von dem zugeordneten Netzknoten zu den anderen Sternschnittstellen oder von einer anderen Sternschnittstelle zu dem zugeordneten Netzknoten in Abhängigkeit von wenigstens einer Aktivität enthalten,
**dadurch gekennzeichnet,**
**dass** der Aktivitätsdetektor (14, 17) Kanrendetektions-Mittel (28) zur Detektion einer Kante oder Flanke im Nachrichtensignal und Aktivitätserkennungs-Mittel (29) zur Feststellung anhand der detektierten Flanken oder Kanten enthält, ob eine Sendeanforderung, eine Nachricht oder das Ende einer Nachricht vorliegt.

2. Netzwerk nach Anspruch 1,
**dadurch gekennzeichnet,**
**dass** jede Sternschnittstelle noch ein erstes und zweites Schaltelement (10, 12) enthält, dass das erste Schaltelement (10) im aktivierten Zustand zum Durchlassen einer Nachricht von dem zugeordneten Netzknoten zu den anderen Sternschnittstellen und das zweite Schaltelement (12) im aktivierten Zustand zum Durchlassen einer Nachricht von den anderen Sternschnittstellen zu dem zugeordneten Netzknoten vorgesehen ist und
**dass** der Aktivitätsdetektor (14, 17) einer Sternschnittstelle zur Aktivierung des ersten Schaltelements (10) und zur Deaktivierung des zweiten Schaltelements (12) bei Auftreten einer Nachricht von dem zugeordneten Netzknoten und zur Deaktivierung des ersten Schaltelements und zur Aktivierung des zweiten Schaltelements bei Auftreten einer Nachricht von einem anderen Netzknoten vorgesehen ist.

3. Netzwerk nach Anspruch 2,
**dadurch gekennzeichnet,**
**dass** das Kantendetektions-Mittel ein Kantendetektor (28) ist und das Aktivitätserkennungs-Mittel eine Aktivitätserkennungsschaltung (29) ist, dass die Aktivitätserkennungsschaltung (29) einen Sendeanforderungsspeicher (32) und eine Leerlauferkennungsschaltung (33) enthält,
**dass** der Sendeanforderungsspeicher bei Auftreten einer eine Sendeanforderung kennzeichnenden Aktivität zur Änderung seines Speicherinhaltes vorgesehen ist, dessen Speicherinhalt ein Steuersignal für die Aktivierung oder Deaktivierung der Schaltelemente(10, 12) bildet und
**dass** die Leerlauferkennungsschaltung nach einer bestimmten Zeit ohne Auftreten einer Aktivität den Sendeanforderungsspeicher zurücksetzt

4. Netzwerk nach Anspruch 3,
**dadurch gekennzeichnet,**
**dass** die Aktivitätserkennungsschaltung (29) eine Freigabekontrollschaltung enthält, die zur Freigabe der Leerlauferkennungsschaltung (33) nach einer weiteren die Sendeanforderung kennzeichnenden Aktivität vorgesehen ist.

5. Netzwerk nach Anspruch 2,
**dadurch gekennzeichnet,**
**dass** der Aktivitätsdetektor(14, 17)
- einen ersten und zweiten Schalttransistor (38, 39) enthält, die ein in Abhängigkeit vom Nachrichtensignal so geschaltet werden, dass entweder der erste oder der zweite Schalttransistor geschlossen ist und
- einen über zumindest den ersten Schalttransistor (38) aufladbaren und über den zweiten Schalttransistor (39) entladbaren Kondensator (44) enthält.

6. Netzwerk nach Anspruch 5,
**dadurch gekennzeichnet,**
**dass** der Aktivitätsdetektor
- einen dritten und vierten Schalttransistor (43, 41), die in Abhängigkeit von Ausgangssignal so geschaltet werden, dass entweder der dritte oder der vierte Schalttransistor geschlossen ist,
- einen ersten zum dritten Schalttransistor (43) parallel geschalteten einstellbaren Widerstand (51) und einen zweiten zum vierten Schalttransistor(41) parallel geschalteten einstellbaren Widerstand (52) enthält,
- einen mit dem Ausgang gekoppelten Inverter (57),
**dass** während einer eine Sendeanforderung kennzeichnenden Aktivität der aufgeladene Kondensator (44) zur Entladung über den zweiten und vierten Schalttransistor (39, 41) und am Ende einer Nachricht der Kondensator zur Aufladung über den ersten und dritten Schalttransistor (38, 43) vorgesehen ist.

7. Sternknoten (9) in einem Netzwerk mit mehreren Netzknoten(1 bis 4), der zur direkten Kopplung von wenigstens zwei Netzknoten vorgesehen ist und mehrere Sternschnittstellen enthält, die wenigstens einem Netzknoten zugeordnet sind und die jeweils einen Aktivitätsdetektor (14, 17) zur Detektion von Aktivitäten im von dem zugeordneten Netzknoten kommenden Nachrichtensignal und zur Weiterleitung des Nachrichtensignals von dem zugeordneten Netzknoten zu den anderen Sternschnittstellen oder von einer anderen Sternschnittstelle zu dem zugeordneten Netzknoten in Abhängigkeit von wenigstens einer Aktivität enthalten
**dadurch gekennzeichnet,**
**dass** der Aktivitätsdetektor (14, 17) Kantendetektions-Mittel (28) zur Detektion einer Kante oder Flanke im Nachrichtensignal und Aktivitätserkennungs-Mittel (29) zur Feststellung anhand der detektierten Flanken oder Kanten enthält, ob eine Sendeanforderung, eine Nachricht oder das Ende einer Nachricht vorliegt.

## Claims

1. A network comprising a plurality of network nodes (1 to 4) and one star node (9), which star node is provided for the direct coupling of at least two network nodes and includes a plurality of star interfaces which are assigned to at least one network node and which include each an activity detection circuit (14, 17) for detecting activities in the message signal coming from the assigned network node and for transferring the message signal from the assigned network node to the other star interfaces or from another star interface to the assigned network node in dependence on at least one activity, **characterized in that** the activity detection circuit (14, 17) comprises edge detection means (28) for detecting an edge in the message signal and also activity detection means (29) for establishing on account of the detected edges whether a send request is present, a message or the end of a message.

2. A network as claimed in claim 1, **characterized in that** each star interface further includes a first and a second switching element (10, 12), **in that** the first switching element (10) in activated state passes a message from the assigned network node to the other star interfaces and the second switching element (12) in active state passes a message from the other star interfaces to the assigned network node and **in that** the activity detection circuit (14, 17) of a star interface activates the first switching element (10) and deactivates the second switching element (12) when a message occurs coming from the assigned network node and deactivates the first switching element and activates the second switching element when a message occurs coming from another network node.

3. A network as claimed in claim 2, **characterized in that** the edge detection means is an edge detector (28) and the activity detection means is an activity detection circuit (29), that the activity detection circuit (29) includes a send request memory (32) and a no-activity detection circuit (33), that the send request memory changes its memory contents at the occurrence of an activity featuring a send request, the memory contents of the send request memory forming a control signal for activating or deactivating the switching elements (10, 12) and that the no-activity detection circuit resets the send request memory after a certain time interval in which no activity is detected.

4. A network as claimed in claim 3, **characterized in that** the activity detection circuit (29) includes a release control circuit which is provided for releasing the no-activity detection circuit (33) after a further activity featuring the send request.

5. A network as claimed in claim 2, **characterized in that** the activity detection circuit (14, 17) includes
- a first and a second switch transistor (38, 39) which are switched in dependence on the message signal in such a way that either the first or the second switching transistor is turned off and
- a capacitor (44) which can be charged at least via the first switching transistor (38) and discharged via the second switching transistor (39).

6. A network as claimed in claim 56, **characterized in that** the activity detection circuit includes
- a third and a fourth switching transistor (43, 41), which are arranged in dependence on the output signal so that either the third or the fourth switching transistor is turned off,
- a first adjustable resistor (51) connected in parallel with the third switching transistor (43) and a second adjustable resistor (52) connected in parallel with the fourth switching transistor (41),
- and an inverter (57) coupled to the output,
**in that** during an activity featuring a send request, the charged capacitor (44) is discharged via the second and fourth switching transistors (39, 41) and at the end of a message the capacitor is charged via the first and third switching transistors (38, 43).

7. A star node (9) in a network comprising a plurality of network nodes (1 to 4), which star node is arranged for providing a direct coupling of at least two network nodes and includes a plurality of star interfaces which are assigned to at least one network node and which include each an activity detection circuit (14, 17) for detecting activities in the message signal coming from the assigned network node and for transferring the message signal from the assigned network node to the other star interfaces or from another star interface to the assigned network nodes in dependence on at least one activity, **characterized in that** the activity detection circuit (14, 17) includes edge detection means(28) for detecting an edge in the message signal and also activity detection means (29) for establishing on account of the detected edges whether a send request is present, a message or the end of a message.

## Revendications

1. Réseau avec plusieurs noeuds de réseau (1 à 4) et un noeud central (9) qui est prévu pour le couplage direct d'au moins deux noeuds de réseau et contient plusieurs interfaces centrales qui sont affectées à au moins un noeud de réseau et qui contiennent respectivement un détecteur d'activité (14,17) pour la détection d'activités dans le signal de message provenant du noeud de réseau affecté et pour la transmission du signal de message du noeud de réseau affecté vers les autres interfaces centrales ou d'une autre interface centrale vers le noeud de réseau affecté en fonction d'au moins une activité,
**caractérisé en ce**
**que** le détecteur d'activité (14, 17) contient des moyens de détection des bords (28) pour la détection d'un bord ou d'un flanc dans le signal de message et des moyens détecteurs d'activité (29) pour déterminer à l'aide des flancs ou bords détectés si une demande de transmission, un message ou la fin d'un message est présent.

2. Réseau selon la revendication 1,
**caractérisé en ce**
**que** chaque interface centrale contient encore des premier et deuxième éléments de commutation (10,12), que le premier élément de commutation (10) est prévu à l'état activé en vue de faire passer un message du noeud de réseau affecté vers les autres interfaces centrales et le deuxième élément de commutation (12) est prévu à l'état activé pour faire passer un message des autres interfaces centrales vers le noeud de réseau affecté et
**que** le détecteur d'activité (14,17) d'une interface centrale est prévu pour l'activation du premier élément de commutation (10) et pour la désactivation du deuxième élément de commutation (12) en cas d'apparition d'un message du noeud de réseau affecté et pour la désactivation du premier élément de commutation et pour l'activation du deuxième élément de commutation lors de l'apparition d'un message d'un autre noeud de réseau.

3. Réseau selon la revendication 2,
**caractérisé en ce**
**que** le moyen de détection des bords est un détecteur de bord (28) et que le moyen détecteur d'activités est un circuit détecteur d'activité (29),
**que** le circuit détecteur d'activité (29) contient une mémoire de demande de transmission (32) et un circuit de reconnaissance de marche à vide (33),
**que** la mémoire de demande de transmission est prévue en cas d'apparition d'une activité caractérisant une demande de transmission pour la variation du contenu de la mémoire dont le contenu de la mémoire forme un signal de commande pour l'activation ou la désactivation de l'élément de commutation (10,12) et
**que** le circuit de reconnaissance de marche à vide est réinitialisé après une période déterminée sans apparition d'une activité de la mémoire de demande de transmission.

4. Réseau selon la revendication 2,
**caractérisé en ce**
**que** le circuit détecteur d'activité (29) contient un circuit de contrôle de déblocage qui est prévu pour le déblocage du circuit de reconnaissance de marche à vide (33) selon une autre activité caractérisant la demande de transmission.

5. Réseau selon la revendication 2,
**caractérisé en ce**
**que** le détecteur d'activité (14, 17) contient
des premier et deuxième transistors de commutation (38, 39) qui sont montés en fonction du signal de message de telle sorte que soit le premier, soit le deuxième transistor de commutation soit fermé et
un condensateur (44) chargeable par l'intermédiaire du premier transistor de commutation (38) au moins et déchargeable par l'intermédiaire du deuxième transistor de commutation (39).

6. Réseau selon la revendication 5
**caractérisé en ce**
**que** le détecteur d'activité contient
des troisième et quatrième transistors de commutation (43, 41) qui sont montés en fonction du signal de sortie de telle sorte que soit le troisième, soit le quatrième transistor de commutation soit fermé,
une première résistance (51) réglable montée en parallèle au troisième transistor de commutation (43) et une deuxième résistance (52) réglable montée en parallèle au deuxième transistor de commutation (41),
un inverseur (57) couplé à la sortie
**que**, pendant une activité caractérisant une demande de transmission, le condensateur chargé (44) est prévu pour la décharge par l'intermédiaire des deuxième et quatrième transistors de commutation (39, 41) et, à la fin d'un message, le condensateur est prévu pour la charge par l'intermédiaire des premier et troisième transistors de commutation (38, 43).

7. Noeud de réseau (9) dans un réseau avec plusieurs noeuds de réseau (1 à 4) qui est prévu pour le couplage direct d'au moins deux noeuds de réseau et contient plusieurs interfaces centrales qui sont affectées à au moins un noeud de réseau et qui contiennent respectivement un détecteur d'activité (14, 17) pour la détection d'activités dans le signal de message provenant du noeud de réseau affecté et pour la transmission du signal de message du noeud de réseau affecté vers les autres interfaces centrales ou d'une autre interface centrale vers le noeud de réseau affecté en fonction d'au moins une activité,
**caractérisé en ce**
**que** le détecteur d'activité (14, 17) contient des moyens de détection de bords (28) pour la détection d'un bord ou d'un flanc dans le signal de message et des moyens détecteurs d'activité (29) pour déterminer à l'aide des flancs ou bords détectés si une demande de transmission, un message ou la fin d'un message est présent.
